# EUROPEAN PATENT SPECIFICATION

(11) **EP 1 626 405 B1**
(45) Date of publication and mention of the grant of the patent: **24.09.2008**
(21) Application number: 05254777.5
(22) Date of filing: 29.07.2005
(51) Int. Cl.: G11B 19/12

(54) **Method of determining the type of an optical disc and a data recording and/or reproducing apparatus**
Verfahren zur Bestimmung des Typs einer optischen Platte und Daten-Aufzeichnungs und Wiedergabegerät
Méthode pour déterminer le type d'un disque optique et appareil d'écriture et de lecture d'information

(30) Priority: 13.08.2004 KR 2004063758
(43) Date of publication of application: 15.02.2006
(73) Proprietor: SAMSUNG ELECTRONICS CO., LTD., Suwon-si, Gyeonggi-do (KR)
(72) Inventor: An, Kwang-ok, Suwon-si Gyeonggi-do (KR); Ma, Byung-in, Suwon-si Gyeonggi-do (KR)
(74) Representative: Robinson, Ian Michael

(56) References cited:
- EP-A- 0 969 459
- JP-A- 2004 005 764
- US-B1- 6 343 182

## Description

The present invention relates to a method of determining the type of an optical disc and a data recording and/or reproducing apparatus.

There are various types of information storage media on which information is stored. Such media include magnetic discs, such as floppy discs and hard discs, semiconductor memory chips such as ROMs or RAMs, and optical discs on which data is recorded using a laser.

Optical discs are very widely used because optical discs have large information storage capacity and costs thereof are comparatively low. Optical discs are classified into compact discs (CDs), digital versatile discs (DVDs), and BLU-RAY discs (BD), which are next generation discs, according to the information storage capacity therein.

Generally, data may be read from or written onto various types of optical discs using a data recording and/or reproducing apparatus. When an optical disc is loaded into a data recording and/or reproducing apparatus, the data recording and/or reproducing apparatus determines the type of the loaded optical disc. The type of the loaded optical disc may be certainly known by reproducing data recorded in a lead-in area of the optical disc, but a problem exists in that the data recording and/or reproducing apparatus may reproduce data before the type of the loaded optical disc is known. Accordingly, in the conventional art, the type of an optical disc may be determined according to a previously determined optical disc determination order. For example, if an optical disc determination order previously determined by a manufacturer of a data recording and/or reproducing apparatus is BD, DVD, and CD, the data recording and/or reproducing apparatus determines whether a loaded optical disc is a BD. In order to determine whether the loaded disc is a BD, the data recording and/or reproducing apparatus sets each parameter corresponding to a BD such as a power value of a laser diode. After that, a laser is scanned on the optical disc, and whether the loaded optical disc is a BD is determined based on a signal obtained by moving an objective lens up/down.

When the loaded optical disc is not a BD, whether the loaded optical disc is a DVD is determined. In order to determine whether the loaded disc is a DVD, a process similar to the process described above is performed. As such, the data recording and/or reproducing apparatus sets each parameter corresponding to a DVD such as a power value of a laser diode, scans a laser on the optical disc, and determines whether the loaded optical disc is a DVD based on a signal obtained by moving the objective lens up/down. When the loaded optical disc is not a DVD, whether the loaded optical disc is a CD is determined. When the loaded optical disc is not a CD, whether the loaded disc is an unknown disc is finally determined.

As is described above, in the conventional art, when an optical disc is loaded on the data recording and/or reproducing apparatus, an optical disc type determination process takes place according to a previously determined order. Accordingly, when the determination order is BD, DVD, and CD, an initialization time of the data recording and/or reproducing apparatus in which a CD is loaded is always longer than an initialization time of the data recording and/or reproducing apparatus in which a BD or a DVD is loaded. During the Initialization time, the data recording and/or reproducing apparatus is turned on and information about a loaded optical disc is obtained.

EP-A-0 969 459 discloses a fast startup procedure for multimode data players and/or recorders. A method is disclosed which is used to accelerate the identifying of the type of data carrier at insertion of the data carrier in a multimode player and/or recorder which accepts different types of data carriers. Looking up in a table of use statistics allows to determine which type is most often used thus most probable to be encountered, and to select a parameter or a set of parameters associated to this type to test the data carrier. The precharacterising portions of the appended claims are based on this document.

According to the present invention there is provided an apparatus and method as set forth in the appended claims. Preferred features of the invention will be apparent from the dependent claims, and the description which follows.

An aspect of the present invention provides a data recording and/or reproducing apparatus which relatively rapidly determines a type of a loaded optical disc to reduce an initialization time to use the optical disc.

The present invention also provides an optical disc type determination method in which a type of a loaded optical disc is rapidly determined to reduce an initialization time to use the optical disc.

Additional and/or other aspects and advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a block diagram of a data recording and/or reproducing apparatus according to an embodiment of the present invention;
Figure 2 is a flow chart of an optical disc type determination method according to an embodiment of the present invention;
Figure 3 is a flow chart illustrating an example of an optical disc type determination process according to an embodiment of the present invention;
Figure 4A is a diagram of a memory storing priority information for initial optical disc type determination according to an embodiment of the present invention;
Figure 4B is a diagram of a memory storing priority information of an updated optical disc type determination order according to an embodiment of the present invention;
Figure 4C is a diagram of a memory in which priority information of updated optical disc type determination order according to another embodiment of the present invention;
Figure 5 is a flow chart of an optical disc type determination method according to another embodiment of the present invention;
Figure 6 is a flow chart of an optical disc type determination method according to another embodiment of the present invention;
Figure 7 is a diagram of an example of information about optical disc using specification according to the embodiment of the present invention shown in Figure 6.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

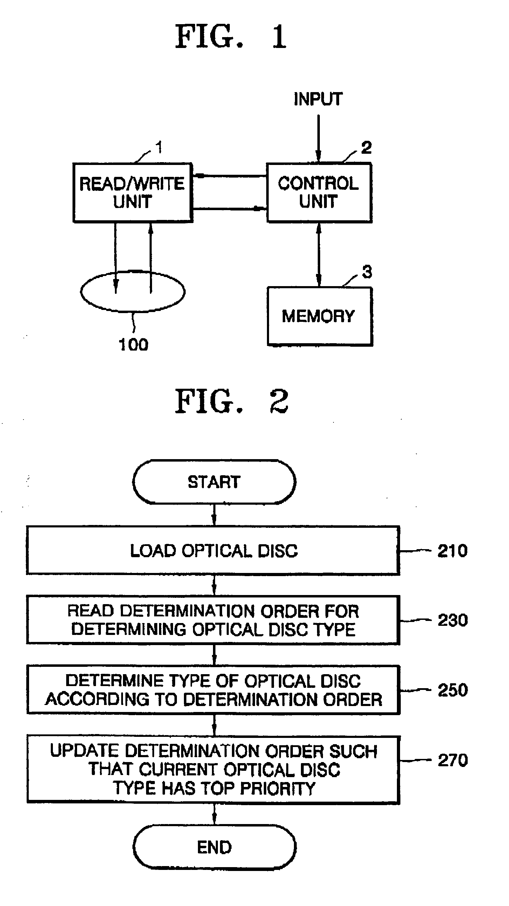

Figure 1 is a block diagram of a data recording and/or reproducing apparatus according to an embodiment of the present invention. Referring to Figure 1, the data recording and/or reproducing apparatus includes a read/write unit 1, a control unit 2, and a memory 3.

The read/write unit 1 writes data on an optical disc 100 that is loaded according to a control of the control unit 2. The read/write unit alternatively reads data recorded on the optical disc 100. The read/write unit 1 includes a spindle motor rotating the optical disc 100 and a pickup. The pickup includes a laser diode and a lens. It is understood, therefore, that the read/write 1 unit may write data onto the optical disc, read data from the optical disc, or both read and write onto and from the optical disc.

The control unit 2 controls entire operations of the data recording and/or reproducing apparatus. Namely, the read/write unit 1 is controlled such that data is recorded on the optical disc 100 or such that data that is recorded on the optical disc 100 is also read via a predetermined signal process. When the optical disc 100 is loaded, the control unit 2 determines the type of the optical disc 100 by referring to order information, including an optical disc type determination order that is stored in the memory 3. The control unit 2 updates the order information stored in the memory 3 after the type of the optical disc 100 is determined.

The control unit 2 includes an RF chip, which converts light that is reflected from the optical disc 100 into an RF signal, a Digital Signal Processor (DSP), which receives the RF signal and performs channel decoding and error correction, a servo, which performs focusing and tracking, an interface, and a system controller, not separately shown.

The memory 3 stores information about determination order of the optical disc type. When the type of the loaded optical disc 100 is determined by the control unit 2, the order is updated by the control unit 2. The information about the determination order is stored at a specific address of the memory 3. On the other hand, the memory 3 may be nonvolatile because the memory 3 is required to continuously store data even though power is not supplied to the data recording and/or reproducing apparatus.

Hereinafter, a method of determining an optical disc type according to an embodiment of the present invention, which is performed by the data recording and/or reproducing apparatus of Figure 1, will now be described.

Figure 2 is a flow chart of an optical disc type determination method according to an embodiment of the present invention.

When the optical disc 100 is loaded in the data recording and/or reproducing apparatus (operation 210), the control unit 2 reads information about a determination order optical stored in the memory 3 (operation 230). The information about the determination order is updated based on a type of an optical disc used previously in the data recording and/or reproducing apparatus.

The control unit 2 determines the type of the optical disc 100 loaded according to the determination order read from the memory 3 (operation 250).

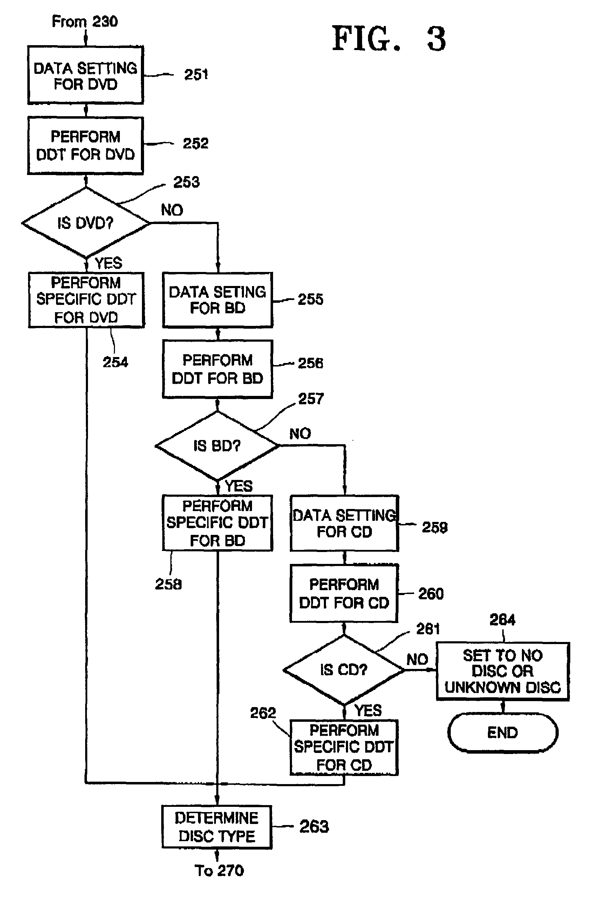

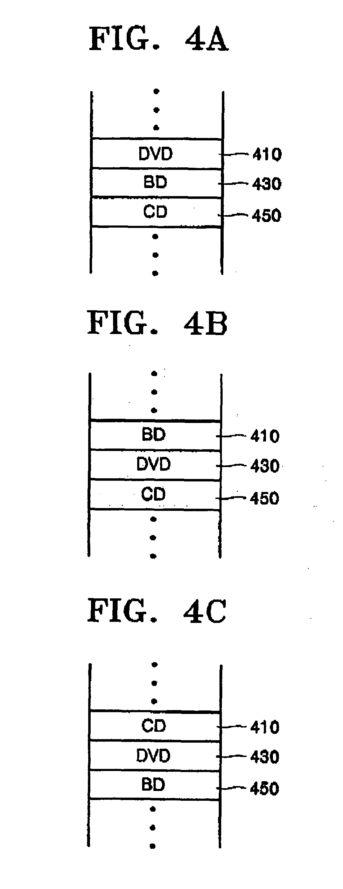

Figure 3 is a flow chart illustrating an example of a process of optical disc type determination. When the determination order read from the memory 3 is DVD, BD, and CD as shown in Figure 4A, the control unit 2 determines first whether the optical disc 100 is a DVD. Namely, various data (for example, power value of a laser diode corresponding to a DVD and phase alignment of the pickup to determine whether the optical disc 100 is a DVD) are set (operation 251). After the data are set, a disc detection (DDT) process is performed (operation 252). The DDT process is performed based on a signal, which is obtained by scanning a laser on the optical disc 100 and moving an objective lens up/down.

According to the result of the DDT, whether the loaded optical disc 100 is a DVD is determined (operation 253). When the loaded optical disc 100 is determined to be a DVD, a specific DDT process that is related to DVDs (operation 254) is performed. The specific DVD related DDT process determines what kind of a DVD the DVD is. Namely, in an embodiment of the invention, the DVD specific DDT process determines whether the DVD is a rewritable DVD or a read only DVD. In addition, the DVD specific DDT process corresponds to an operation in which an initial process to use the optical disc 100, in which information written in a read-in area of the optical disc 100 is read, is finished. It is understood that the DVD specific DDT process may determine other characteristics of the DVD.

If the loaded optical disc 100 is determined to not be a DVD, whether the loaded optical disc 100 is a BD is determined according to the determination order. Similar to operations 251 through 254, the control unit 2 sets various data, turns a laser diode on, and performs a BD DDT process (operations 255 and 256).

If the loaded optical disc 100 is determined to be a BD (operation 257), a BD related DDT process is performed (operation 258). If the loaded optical disc 100 is determined to not be a BD, finally, whether the loaded optical disc 100 is a CD is determined according to operations 259 through 264.

Referring to Figure 2, when the type of the optical disc 100 is determined according to 250, the control unit 2 updates the determination order of optical disc type determination such that whatever the type of the optical disc 100 that is loaded into the apparatus is becomes the first element in the determination order (operations 270).

Figure 4B shows the memory 3 in which updated determination order for optical disc type determination is stored when the type of the optical disc 100 is a BD. Figure 4C shows the memory 3 in which an updated determination order, to be used for optical disc type determination, is stored when the optical disc 100 is a CD. A type of disc which is stored at a first position address 410 of the memory 3 has top priority. Discs are ranked in an order in which a second type of a disc is stored at a second position address 430 and a third type of a disc is stored at a third position address 450. Other orders of priority for the second highest priority type of disc and any lower priority type of disc may be determined by various methods. For example, if a disc corresponding to the top priority is a BD, the second element may be a DVD and third is a CD. Here, it is understood that the invention is not limited to the method described above and may involve various methods.

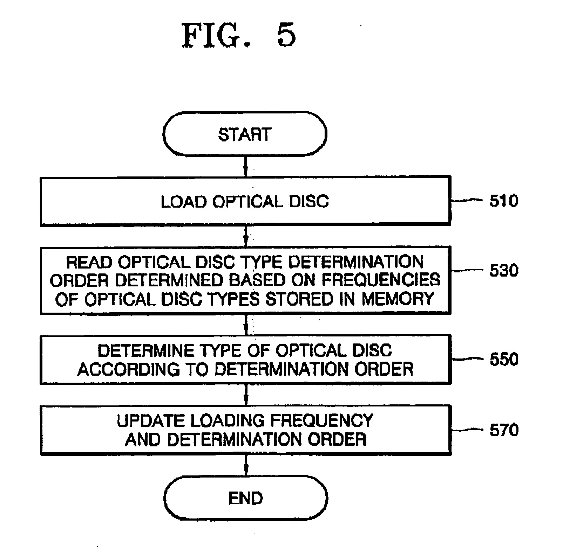

Figure 5 is a flow chart of an optical disc type determination method according to another embodiment of the present invention. In the optical disc type determination method according to the embodiment of the present invention of Figure 2, the determination order is updated such that a type of an optical disc which is recently used by a user becomes top priority. However, in the optical disc type determination method of Figure 5, an optical disc type is determined according to a determination order based on a frequency that a particular type of optical disc is loaded in the data recording and/or reproducing apparatus. Frequency information and determination order based on the frequency information are stored in the memory 3.

Referring to Figure 5, when the optical disc 100 is loaded in the data recording and/or reproducing apparatus (operation 510), the control unit 2 reads the information stored in the memory 3 (operation 530). The control unit 2 determines the type of the loaded optical disc 100 according to the determination order read from the memory 3 (operation 550). An example of an optical disc type determination process is substantially similar to that which is illustrated in Figure 3. After the type of the optical disc 100 is determined in operation 550, the control unit 2 updates the frequency information and the determination order based on the frequency information and stores the updated information in the memory 3 (operation 570).

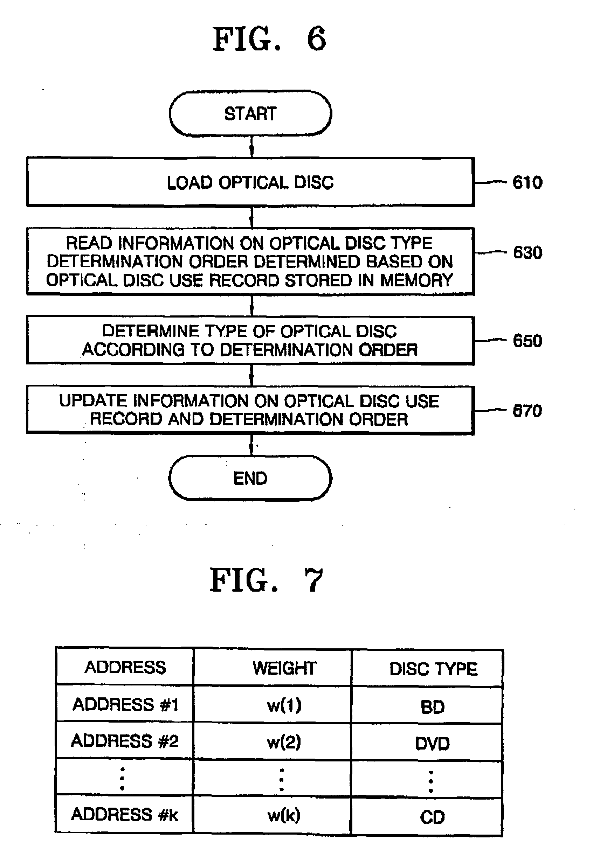

Figure 6 is a flow chart of an optical disc type determination method according to another embodiment of the present invention. According to this embodiment of the optical disc type determination method, information including an optical disc use record, in which an optical disc recently loaded on the data recording and/or reproducing apparatus is highly weighted, is stored at the memory 3. A type of a presently loaded optical disc is then determined according to a determination order based on the information of the optical disc use record.

Referring to Figure 6, the optical disc type determination method according to another embodiment of the present invention will now be described. When the optical disc 100 is loaded in the data recording and/or reproducing apparatus (operation 610), the control unit 2 reads the information of the determination order based on the information of the optical disc use record stored in the memory 3 (operation 630).

Figure 7 is a diagram of an example of the information of the optical disc use record according to the embodiment of the present invention shown in Figure 6. A disc type that is stored in address #1 of the memory 3 represents the type of the disc that was most recently loaded. In other words, when a number of an address is increased, the increase indicates that the type of disc that was loaded was previously loaded and that another type of disc is presently loaded. Weight 1 through weight k are allotted to the address #1 through #k, respectively, with the value of the weight 1 being the greatest, and the value of the weight k being the smallest. Namely, a recently used disc type has the highest weight. The control unit 2 determines the determination order by referring to the optical disc use record as shown in Figure 7. All weights corresponding to a BD type are summed. Similarly, after the summed weights corresponding to a DVD and a CD are respectively obtained, the three summed weights are compared to determine the determination order. The determination order is stored at a specific address as shown in Figures 4A through 4C.

The control unit 2 determines the type of the loaded optical disc 100 according to the determination order read from the memory 3 (operation 650). An example of an optical disc type determination process is as shown in Figure 3.

When the type of the optical disc 100 is determined in operation 650, the control unit 2 updates information on an optical disc use record and the determination order based on the information on the optical disc use record and stores the updated determination order at a specific address in the memory 3 (operation 670).

It is understood that while the above discussed embodiments of the invention refer to DVDs, BDs, and CDs, this invention could be applied to other types of discs optical or otherwise.

As is described above, according to the present invention, various methods to change an order for optical disc type determination may be used to rapidly determine what a type of a loaded optical disc is. These include using patterns of optical disc usage, using a frequency of a type of a loaded optical disc, and using a point of time in which an optical disc is used. As such, an initialization time to use an optical disc is reduced.

The invention may also be embodied as computer readable codes on a computer readable recording medium. The computer readable recording medium is any data storage device that stores data which may be thereafter read by a computer system. Examples of the computer readable recording medium include read-only memory (ROM), random-access memory (RAM), CD-ROMs, magnetic tapes, floppy discs, optical data storage devices, and carrier waves (such as data transmission through the Internet). The computer readable recording medium may also be distributed over network coupled computer systems so that the computer readable code is stored and executed in a distributed fashion.

Although a few preferred embodiments have been shown and described, it will be appreciated by those skilled in the art that various changes and modifications might be made without departing from the scope of the invention, as defined in the appended claims.

## Claims

1. A data recording and/or reproducing apparatus which reads/writes data from/onto different types of optical discs, comprising:
a read/write unit (1) which reads and/or writes data from/onto an optical disc that is loaded into the apparatus;
a memory (3) which stores an optical disc type determination order to determine what type of optical disc the optical disc is from a plurality of optical disc types; and
a control unit (2) which controls the read/write unit (1) according to the optical disc type determination order stored in the memory (3) to determine the type of the optical disc;
**characterised in that:**
the control unit (2) updates the determination order stored in the memory (3) such that the type of the loaded optical disc has top priority and the type of an immediately previously loaded disc has the next high priority.

2. The apparatus of claim 1, wherein the memory (3) is a nonvolatile memory (3).

3. A method of determining a type of an optical disc that is loaded in a data recording and/or reproducing apparatus, comprising:
reading an optical disc type determination order that is stored in a memory (3) of the data recording and/or reproducing apparatus;
choosing a type of the optical disc from an ordered plurality of optical disc types; and
controlling a read/write unit (1) in the data recording and/or reproducing apparatus according to the choosing to determine the type of the optical disc;
**characterised by:**
updating the ordered plurality of optical disc types stored in the memory (3) such that the type of the presently loaded optical disc has top priority and the type of an immediately previously loaded disc has the next high priority.

4. The method of claim 3, wherein the memory (3) is a nonvolatile memory (3).

5. A data recording and/or reproducing apparatus which reads and/or writes data from/onto different types of optical discs, comprising:
a read/write unit (1) which reads and/or writes data from/onto a loaded optical disc;
a memory (3) which stores an optical disc type determination order to determine what type of optical disc the optical disc is from a plurality of optical disc types; and
a control unit (2) which controls the read/write unit (1) according to the determination order stored in the memory (3) to determine the type of the loaded optical disc;
**characterised in that:**
the memory (3) stores information including an optical discs use record in which an optical disc recently loaded on the data recording and/or reproducing apparatus is highly weighted and the optical disc type determination order is based on the information including the optical disc use record.

6. The apparatus of claim 5, wherein the control unit (2) updates information on the optical discs use record and the determination order stored in the memory (3), after determining the type of the loaded optical disc.

7. The apparatus of claim 5 or 6, wherein the memory (3) is a nonvolatile memory (3).

8. A method of discriminating the type of an optical disc that is loaded in a data recording and/or reproducing apparatus, comprising:
reading an optical disc type determination order that is stored in a memory (3) of the data recording and/or reproducing apparatus;
controlling a read/write unit (1) of the data recording and/or reproducing apparatus according to the determination to determine the type of a loaded optical disc;
**characterised in that:**
the optical disc type determination order stored in the memory (3) is determined based on the information on an optical disc use record in which an optical disc recently loaded on the data recording and/or reproducing apparatus is highly weighted.

9. The method of claim 8, further comprising the operation of updating the information of the optical disc use record and the determination order stored in the memory (3), after determining the type of the loaded optical disc.

10. The method of claim 8 or 9, wherein the memory (3) is a nonvolatile memory (3).

11. A computer readable recording medium storing a program to execute a method of determining a type of an optical disc that is loaded in a data recording and/or reproducing apparatus, the method comprising:
reading an optical disc type determination order stored in a memory (3) included in the data recording and/or reproducing apparatus in order to determine a type of the optical disc from a plurality of optical disc types; and
controlling a read/write unit (1) in the data recording and/or reproducing apparatus according to the determination to determine the type of the optical disc;
**characterised by:**
updating the ordered plurality of optical disc types stored in the memory (3) such that the type of the presently loaded optical disc has top priority and the type of an immediately previously loaded disc has the next high priority.

12. A computer readable recording medium storing a program to execute a method of determining a type of an optical disc that is loaded in a data recording and/or reproducing apparatus, the method comprising:
reading an optical disc type determination order that is stored in a memory (3) of the data recording and/or reproducing apparatus;
controlling a read/write unit (1) of the data recording and/or reproducing apparatus according to the determination to determine the type of a loaded optical disc;
**characterised in that:**
the optical disc type determination order stored in the memory (3) is.determined based on the information on an optical disc use record in which an optical disc recently loaded on the data recording and/or reproducing apparatus is highly weighted.

13. A data recording and/or reproducing apparatus to be used with different types of discs, comprising:
a read/write unit (1) to read/write data from/onto a disc that is presently loaded;
a memory (3) to store information describing what types of discs were previously loaded and an determination order based on the information; and
a control unit (2) to determine the type of the presently loaded disc according to the stored determination order and to update the information based on the determined type of the presently loaded disc;
**characterised in that:**
the control unit (2) updates the determination order stored in the memory (3) such that the type of the loaded optical disc has top priority and the type of an immediately previously loaded disc has the next high priority.

14. The apparatus according to claim 13, wherein optical discs are to be loaded into the apparatus.

15. The apparatus according to claim 13 or 14, wherein the information comprises:
a description of types of discs that were previously loaded;
frequencies that certain types of discs are loaded; and
a record of disc type usage.

16. The apparatus according to claim 15, wherein the record is written based on the frequencies that certain types of discs are loaded and weights assigned to certain frequencies.

17. The apparatus according to any of claims 13 to 16, wherein the read/write unit (1) comprises a spindle motor to rotate the disc and a pickup, including a laser diode and a lens.

18. A method of determining a type of a disc that is presently loaded in a data recording and/or reproducing apparatus having a determination order stored therein, the method comprising:
reading a high priority disc type from the determination order;
testing to determine whether the type of the presently loaded disc matches the read high priority disc type; and
reading a next high priority disc type from the determination order and retesting to determine whether the type of the presently loaded disc matches the read next high priority disc type, if the presently loaded disc does not match the read high priority disc type;
**characterised by:**
updating the ordered plurality of the optical disc types stored in the memory (3) such that the type of the presently loaded optical disc has top priority and the type of an immediately previously loaded disc has the next priority.

19. The method according to claim 18, further comprising assigning priority to various disc types based on information relating to disc types of previously loaded discs.

20. The method according to claim 19, further comprising:
describing types of discs that were previously loaded;
determining frequencies that certain types of discs are loaded; and
writing a record of disc type usage, wherein the information relating to disc types of previously loaded discs comprises the description of the types of discs that were previously loaded, the determined frequencies, and the written record.

21. The method according to claim 20, wherein the writing of the record comprises:
determining frequencies that certain types of discs are loaded;
assigning weights to certain frequencies; and
wiring the record based on the assigned weights.

22. The method according to any of claims 18 to 21, wherein when the read high priority disc type is that of a digital versatile disc (DVD), the method further comprises performing a specific disc detection (DDT) process related to DVDs.

23. The method according to claim 22, further comprising determining whether the DVD is a rewritable DVD or a read only DVD.

24. The method according to any of claims 18 to 23, wherein if the read high priority disc type is that of a BLU-RAY (BD) disc, the method further comprises performing a specific disc detection (DT) process related to BDs.

25. A computer readable recording medium storing a program to execute the method of any of claims 18 to 24.

## Patentansprüche

1. Datenaufzeichnungs- und/oder Datenwiedergabevorrichtung, die Daten aus unterschiedlichen Typen optischer Platten liest bzw. auf dieselben schreibt, umfassend:
eine Lese-Schreib-Einheit (1), die Daten von einer optischen Platte, die in die Vorrichtung geladen wird, liest und/oder auf diese schreibt;
einen Speicher (3), der eine Typ-Feststellungsreihenfolge optischer Platten speichert, um aus einer Vielzahl von optischen Plattentypen festzustellen, welcher Typ optischer Platte die optische Platte ist; und
eine Steuereinheit (2), die die Lese-Schreib-Einheit (1) gemäß der Typ-Feststellungsreihenfolge optischer Platten, die in dem Speicher (3) gespeichert ist, steuert, um den Typ der optischen Platte festzustellen;
und **dadurch gekennzeichnet, dass**
die Steuereinheit (2) die Feststellungsreihenfolge, die in dem Speicher (3) gespeichert ist, derart aktualisiert, dass der Typ der geladenen optischen Platte höchste Priorität hat und der Typ einer unmittelbar zuvor geladenen Platte die nächsthohe Priorität hat.

2. Vorrichtung nach Anspruch 1, wobei der Speicher (3) ein nichtflüchtiger Speicher (3) ist.

3. Verfahren zum Feststellen eines Typs einer optischen Platte, die in eine Datenaufzeichnungs- und/oder Datenwiedergabevorrichtung geladen wird, umfassend:
Lesen einer Typ-Feststellungsreihenfolge optischer Platten, die in einem Speicher (3) der Datenaufzeichnungs- und/oder Datenwiedergabevorrichtung gespeichert ist;
Wählen eines Typs der optischen Platte aus einer geordneten Vielzahl von optischen Plattentypen; und
Steuern einer Lese-Schreib-Einheit (1) in der Datenaufzeichnungs- und/oder Datenwiedergabevorrichtung gemäß der Wahl, um den Typ der optischen Platte festzustellen;
und **gekennzeichnet durch**
Aktualisieren der geordneten Vielzahl von optischen Plattentypen, die in dem Speicher (3) gespeichert ist, so dass der Typ der aktuell geladenen optischen Platte höchste Priorität hat und der Typ einer unmittelbar zuvor geladenen Platte die nächsthohe Priorität hat.

4. Verfahren nach Anspruch 3, wobei der Speicher (3) ein nichtflüchtiger Speicher (3) ist.

5. Datenaufzeichnungs- und/oder Datenwiedergabevorrichtung, die Daten aus unterschiedlichen Typen optischer Platten liest bzw. auf dieselben schreibt, umfassend:
eine Lese-Schreib-Einheit (1), die Daten von einer geladenen optischen Platte liest und/oder Daten auf eine geladene optische Platte schreibt;
einen Speicher (3), der eine Typ-Feststellungsreihenfolge optischer Platten speichert, um aus einer Vielzahl von optischen Plattentypen festzustellen, welcher Typ optischer Platte die optische Platte ist; und
eine Steuereinheit (2), die die Lese-Schreib-Einheit (1) gemäß der Feststellungsreihenfolge, die in dem Speicher (3) gespeichert ist, steuert, um den Typ der geladenen optischen Platte festzustellen;
und **dadurch gekennzeichnet, dass**
der Speicher (3) Informationen speichert, die ein Verwendungsverzeichnis optischer Platten enthalten, in dem eine optische Platte, die kürzlich in die Datenaufzeichnungs- und/oder Datenwiedergabevorrichtung geladen wurde, hoch gewichtet ist, und dass die Typ-Feststellungsreihenfolge optischer Platten auf den Informationen basiert, die das Verwendungsverzeichnis optischer Platten enthalten.

6. Vorrichtung nach Anspruch 5, wobei die Steuereinheit (2) Informationen über das Verwendungsverzeichnis optischer Platten und die Feststellungsreihenfolge, die in dem Speicher (3) gespeichert sind, nach dem Feststellen des Typs der geladenen optischen Platte aktualisiert.

7. Vorrichtung nach Anspruch 5 oder 6, wobei der Speicher (3) ein nichtflüchtiger Speicher (3) ist.

8. Verfahren zum Unterscheiden des Typs einer optischen Platte, die in eine Datenaufzeichnungs- und/oder Datenwiedergabevorrichtung geladen ist, umfassend:
Lesen einer Typ-Feststellungsreihenfolge optischer Platten, die in einem Speicher (3) der Datenaufzeichnungs- und/oder Datenwiedergabevorrichtung gespeichert ist;
Steuern einer Lese-Schreib-Einheit (1) der Datenaufzeichnungs- und/oder Datenwiedergabevorrichtung gemäß der Feststellung, um den Typ einer geladenen optischen Platte festzustellen;
und **dadurch gekennzeichnet, dass**
die Typ-Feststellungsreihenfolge optischer Platten, die in dem Speicher (3) gespeichert ist, auf Basis der Informationen über ein Verwendungsverzeichnis optischer Platten festgestellt wird, in dem eine optische Platte, die kürzlich in die Datenaufzeichnungs- und/oder Datenwiedergabevorrichtung geladen wurde, hoch gewichtet ist.

9. Verfahren nach Anspruch 8, des Weiteren umfassend den Vorgang des Aktualisierens der Informationen des Verwendungsverzeichnisses optischer Platten und der Feststellungsreihenfolge, die in dem Speicher (3) gespeichert sind, nach dem Feststellen des Typs der geladenen optischen Platte.

10. Verfahren nach Anspruch 8 oder 9, wobei der Speicher (3) ein nichtflüchtiger Speicher (3) ist.

11. Computerlesbares Aufzeichnungsmedium, das ein Programm speichert, um ein Verfahren zum Feststellen eines Typs einer optischen Platte, die in eine Datenaufzeichnungs- und/oder Datenwiedergabevorrichtung geladen ist, auszuführen, wobei das Verfahren umfasst:
Lesen einer Typ-Feststellungsreihenfolge optischer Platten, die in einem Speicher (3), der in der Datenaufzeichnungs- und/oder Datenwiedergabevorrichtung enthalten ist, gespeichert ist, um einen Typ der optischen Platte aus einer Vielzahl von Typen optischer Platte festzustellen; und
Steuern einer Lese-Schreib-Einheit (1) in der Datenaufzeichnungs- und/oder Datenwiedergabevorrichtung gemäß der Feststellung, um den Typ der optischen Platte festzustellen;
und **gekennzeichnet durch**
Aktualisieren der geordneten Vielzahl von optischen Plattentypen, die in dem Speicher (3) gespeichert ist, so dass der Typ der aktuell geladenen optischen Platte höchste Priorität hat und der Typ einer unmittelbar zuvor geladenen Platte die nächsthohe Priorität hat.

12. Computerlesbares Aufzeichnungsmedium, das ein Programm speichert, um ein Verfahren zum Feststellen eines Typs einer optischen Platte, die in eine Datenaufzeichnungs- und/oder Datenwiedergabevorrichtung geladen ist, auszuführen, wobei das Verfahren umfasst:
Lesen einer Typ-Feststellungsreihenfolge optischer Platten, die in einem Speicher (3) der Datenaufzeichnungs- und/oder Datenwiedergabevorrichtung gespeichert ist;
Steuern einer Lese-Schreib-Einheit (1) der Datenaufzeichnungs- und/oder Datenwiedergabevorrichtung gemäß der Feststellung, um den Typ einer geladenen optischen Platte festzustellen;
und **dadurch gekennzeichnet, dass**
die Typ-Feststellungsreihenfolge optischer Platten, die in dem Speicher (3) gespeichert ist, auf Basis der Informationen über ein Verwendungsverzeichnis optischer Platten festgestellt wird, in dem eine optische Platte, die kürzlich in die Datenaufzeichnungs- und/oder Datenwiedergabevorrichtung geladen wurde, hoch gewichtet ist.

13. Datenaufzeichnungs- und/oder Datenwiedergabevorrichtung zur Verwendung mit unterschiedlichen Typen von Platten, umfassend:
eine Lese-Schreib-Einheit (1), um Daten von einer aktuell geladenen optischen Platte zu lesen/auf eine aktuell geladene Platte zu schreiben;
einen Speicher (3) zum Speichern von Informationen, die beschreiben, welche Typen von Platten zuvor geladen wurden, und einer Feststellungsreihenfolge auf Basis der Informationen; und
eine Steuereinheit (2) zum Feststellen des Typs der aktuell geladenen Platte gemäß der gespeicherten Feststellungsreihenfolge und zum Aktualisieren der Informationen auf Basis des festgestellten Typs der aktuell geladenen Platte;
und **dadurch gekennzeichnet, dass**
die Steuereinheit (2) die Feststellungsreihenfolge, die in dem Speicher (3) gespeichert ist, derart aktualisiert, dass der Typ der geladenen optischen Platte höchste Priorität hat und der Typ einer unmittelbar zuvor geladenen Platte die nächsthohe Priorität hat.

14. Vorrichtung nach Anspruch 13, wobei optische Platten in die Vorrichtung zu laden sind.

15. Vorrichtung nach Anspruch 13 oder 14, wobei die Informationen umfassen:
eine Beschreibung von Typen von Platten, die zuvor geladen wurden;
Häufigkeiten, mit denen bestimmte Typen von Platten geladen werden; und
ein Verzeichnis der Plattentypverwendung.

16. Vorrichtung nach Anspruch 15, wobei das Verzeichnis auf Basis der Häufigkeiten, mit denen bestimmte Typen von Platten geladen werden, und der Gewichte, die bestimmten Häufigkeiten zugewiesen werden, geschrieben wird.

17. Vorrichtung nach einem der Ansprüche 13 bis 16, wobei die Lese-Schreib-Einheit (1) einen Spindelmotor zum Drehen der Platte und einen Aufnehmer, der eine Laserdiode und eine Linse enthält, umfasst.

18. Verfahren zum Feststellen eines Typs einer Platte, die aktuell in eine Datenaufzeichnungs- und/oder Datenwiedergabevorrichtung mit einer darin gespeicherten Feststellungsreihenfolge geladen ist, wobei das Verfahren umfasst:
Lesen eines Plattentyps hoher Priorität aus der Feststellungsreihenfolge;
Prüfen, um festzustellen, ob der Typ der aktuell geladenen Platte mit dem gelesenen Plattentyp hoher Priorität übereinstimmt; und
Lesen eines Plattentyps nächsthoher Priorität aus der Feststellungsreihenfolge und erneutes Prüfen, um festzustellen, ob der Typ der aktuell geladenen Platte mit dem gelesenen Plattentyp nächsthoher Priorität übereinstimmt, wenn die aktuell geladene Platte nicht mit dem gelesenen Plattentyp hoher Priorität übereinstimmt;
**gekennzeichnet durch:**
Aktualisieren der geordneten Vielzahl der Typen optischer Platte, die in dem Speicher (3) gespeichert ist, so dass der Typ der aktuell geladenen optischen Platte höchste Priorität hat und der Typ einer unmittelbar zuvor geladenen Platte die nächste Priorität hat.

19. Verfahren nach Anspruch 18, des Weiteren umfassend Zuweisen von Priorität zu verschiedenen Plattentypen auf Basis von Informationen in Bezug auf Plattentypen zuvor geladener Platten.

20. Verfahren nach Anspruch 19, des Weiteren umfassend:
Beschreiben von Typen von Platten, die zuvor geladen wurden;
Feststellen von Häufigkeiten, mit denen bestimmte Typen von Platten geladen werden; und
Schreiben eines Verzeichnisses von Plattentypverwendung, wobei die Informationen in Bezug auf Plattentypen zuvor geladener Platten die Beschreibung der Typen von Platten, die zuvor geladen wurden, die festgestellten Häufigkeiten und das geschriebene Verzeichnis umfassen.

21. Verfahren nach Anspruch 20, wobei das Schreiben des Verzeichnisses umfasst:
Feststellen von Häufigkeiten, mit denen bestimmte Typen von Platten geladen werden;
Zuweisen von Gewichten zu bestimmten Häufigkeiten; und
Weiterleiten des Verzeichnisses auf Basis der zugewiesenen Gewichte.

22. Verfahren nach einem der Ansprüche 18 bis 21, wobei, wenn der gelesene Plattentyp hoher Priorität der einer Digital Versatile Disc (DVD) ist, das Verfahren des Weiteren Durchführen eines spezifischen Plattenerfassungs-(DDT)-Prozesses in Bezug auf DVDs umfasst.

23. Verfahren nach Anspruch 22, des Weiteren umfassend Feststellen, ob die DVD eine wiederbeschreibbare DVD oder eine Nur-Lese-DVD ist.

24. Verfahren nach einem der Ansprüche 18 bis 23, wobei, wenn der gelesene Plattentyp hoher Priorität der einer BLU-RAY-(BD)-Platte ist, das Verfahren des Weiteren Durchführen eines spezifischen Plattenerfassungs-(DT)-Prozesses in Bezug auf BDs umfasst.

25. Computerlesbares Aufzeichnungsmedium, das ein Programm speichert, um das Verfahren nach einem der Ansprüche 18 bis 24 auszuführen.

## Revendications

1. Dispositif d'enregistrement et/ou de reproduction de données qui lit des données à partir de différents types de disques optiques et écrit des données sur ceux-ci, comportant :
une unité de lecture/écriture (1) qui lit des données à partir d'un disque optique qui est chargé dans le dispositif et/ou écrit des données sur celui-ci,
une mémoire (3) qui mémorise un ordre de détermination de type de disque optique pour déterminer quel est le type de disque optique à partir d'une pluralité de types de disques optiques, et
une unité de commande (2) qui commande l'unité de lecture/écriture (1) conformément à l'ordre de détermination de type de disque optique mémorisé dans la mémoire (3) pour déterminer le type du disque optique,
**caractérisé en ce que :**
l'unité de commande (2) met à jour l'ordre de détermination mémorisé dans la mémoire (3) de sorte que le type de disque optique chargé a la priorité la plus élevée et le type d'un disque chargé immédiatement précédemment a la priorité la plus élevée suivante.

2. Dispositif selon la revendication 1, dans lequel la mémoire (3) est une mémoire non volatile (3).

3. Procédé pour déterminer un type d'un disque optique qui est chargé dans un dispositif d'enregistrement et/ou de reproduction comportant les étapes consistant à :
lire un ordre de détermination de type de disque optique qui est mémorisé dans une mémoire (3) du dispositif d'enregistrement et/ou de reproduction de données,
choisir un type du disque optique à partir d'une pluralité ordonnée de types de disques optiques, et
commander une unité de lecture/écriture (1) dans le dispositif d'enregistrement et/ou de reproduction de données conformément au choix pour déterminer le type du disque optique,
**caractérisé par** :
la mise à jour de la pluralité ordonnée de types de disques optiques mémorisés dans la mémoire (3) de sorte que le type du disque optique actuellement chargé a la priorité la plus élevée et le type d'un disque chargé immédiatement précédemment a la priorité la plus élevée suivante.

4. Procédé selon la revendication 3, dans lequel la mémoire (3) est une mémoire non volatile (3).

5. Dispositif d'enregistrement et/ou de reproduction de données qui lit des données à partir de différents types de disques optiques et/ou écrit des données sur ceux-ci, comportant :
une unité de lecture/écriture (1) qui lit des données à partir d'un disque optique chargé et/ou écrit des données sur celui-ci,
une mémoire (3) qui mémorise un ordre de détermination de type de disque optique pour déterminer quel est le type du disque optique à partir d'une pluralité de types de disques optiques, et
une unité de commande (2) qui commande l'unité de lecture/écriture (1) conformément à l'ordre de détermination mémorisé dans la mémoire (3) pour déterminer le type du disque optique chargé,
**caractérisé en ce que :**
la mémoire (3) mémorise des informations incluant un enregistrement d'utilisation de disque optique dans lequel un disque optique récemment chargé sur le dispositif d'enregistrement et/ou de reproduction de données est fortement pondéré et l'ordre de détermination de type de disque optique est basé sur les informations incluant l'enregistrement d'utilisation de disque optique.

6. Dispositif selon la revendication 5, dans lequel l'unité de commande (2) met à jour des informations sur l'enregistrement d'utilisation de disque optique et l'ordre de détermination mémorisé dans la mémoire (3), après avoir déterminé le type du disque optique chargé.

7. Dispositif selon la revendication 5 ou 6, dans lequel la mémoire (3) est une mémoire non volatile (3).

8. Procédé pour discriminer le type d'un disque optique qui est chargé dans un dispositif d'enregistrement et/ou de reproduction de données, comportant les étapes consistant à :
lire un ordre de détermination de type de disque optique qui est mémorisé dans une mémoire (3) du dispositif d'enregistrement et/ou de reproduction de données,
commander une unité de lecture/écriture (1) dans le dispositif d'enregistrement et/ou de reproduction de données conformément à la détermination pour déterminer le type d'un disque optique chargé,
**caractérisé en ce que :**
l'ordre de détermination de type de disque optique mémorisé dans la mémoire (3) est déterminé sur la base des informations sur un enregistrement d'utilisation de disque optique dans lequel un disque optique récemment chargé sur le dispositif d'enregistrement et/ou de reproduction de données est fortement pondéré.

9. Procédé selon la revendication 8, comportant en outre l'opération de mise à jour des informations de l'enregistrement d'utilisation de disque optique et l'ordre de détermination mémorisé dans la mémoire (3), après avoir déterminé le type du disque optique chargé.

10. Procédé selon la revendication 8 ou 9, dans lequel la mémoire (3) est une mémoire non volatile (3).

11. Support d'enregistrement lisible par ordinateur mémorisant un programme pour exécuter un procédé de détermination d'un type d'un disque optique qui est chargé dans un dispositif d'enregistrement et/ou de reproduction de données, le procédé comportant les étapes consistant à :
lire un ordre de détermination de type de disque optique mémorisé dans une mémoire (3) inclus dans le dispositif d'enregistrement et/ou de reproduction de données afin de déterminer un type du disque optique à partir d'une pluralité de types de disques optiques, et
commander une unité de lecture/écriture (1) dans le dispositif d'enregistrement et/ou de reproduction de données conformément à la détermination pour déterminer le type du disque optique,
**caractérisé par** :
la mise à jour de la pluralité ordonnée de types de disques optiques mémorisés dans la mémoire (3) de sorte que le type du disque optique actuellement chargé a la priorité la plus élevée et le type d'un disque chargé immédiatement précédemment a la priorité la plus élevée suivante.

12. Support d'enregistrement lisible par ordinateur mémorisant un programme pour exécuter un procédé de détermination d'un type d'un disque optique qui est chargé dans un dispositif d'enregistrement et/ou de reproduction de données, le procédé comportant les étapes consistant à :
lire un ordre de détermination de type de disque optique qui est mémorisé dans une mémoire (3) du dispositif d'enregistrement et/ou de reproduction de données,
commander une unité de lecture/écriture (1) du dispositif d'enregistrement et/ou de reproduction de données conformément à la détermination pour déterminer le type d'un disque optique chargé,
**caractérisé en ce que :**
l'ordre de détermination de type de disque optique mémorisé dans la mémoire (3) est déterminé sur la base des informations sur un enregistrement d'utilisation de disque optique dans lequel un disque optique récemment chargé sur le dispositif d'enregistrement et/ou de reproduction de données est fortement pondéré.

13. Dispositif d'enregistrement et/ou de reproduction de données à utiliser avec différents types de disques comportant :
une unité de lecture/écriture (1) pour lire des données à partir d'un disque qui est actuellement chargé et écrire des données sur celui-ci,
une mémoire (3) pour mémoriser des informations décrivant quels types de disques ont été précédemment chargés et un ordre de détermination basé sur les informations, et
une unité de commande (2) pour déterminer le type du disque actuellement chargé conformément à l'ordre de détermination mémorisé et pour mettre à jour les informations basées sur le type déterminé du disque actuellement chargé,
**caractérisé en ce que :**
l'unité de commande (2) met à jour l'ordre de détermination mémorisé dans la mémoire (3) de sorte que le type de disque optique chargé a la priorité la plus élevée et le type d'un disque chargé immédiatement précédemment a la priorité la plus élevée suivante.

14. Dispositif selon la revendication 13, dans lequel des disques optiques doivent être chargés dans le dispositif.

15. Dispositif selon la revendication 13 ou 14, dans lequel les informations comportent :
une description de types de disques qui ont été précédemment chargés,
des fréquences auxquelles des types particuliers de disques sont chargés, et
un enregistrement d'utilisation de type de disque.

16. Dispositif selon la revendication 15, dans lequel l'enregistrement est écrit sur la base des fréquences auxquelles certains types de disques sont chargés et des pondérations attribuées à certaines fréquences.

17. Dispositif selon l'une quelconque des revendications 13 à 16, dans lequel l'unité de lecture/écriture (1) comporte un moteur à broche pour mettre en rotation le disque et une unité de lecture incluant une diode laser et une lentille.

18. Procédé pour déterminer un type d'un disque qui est actuellement chargé dans un dispositif d'enregistrement et/ou de reproduction de données ayant un ordre de détermination mémorisé dans celui-ci, le procédé comportant les étapes consistant à :
lire un type de disque de priorité élevée à partir de l'ordre de détermination,
effectuer un test pour déterminer si le type du disque actuellement chargé correspond au type du disque de priorité élevée lu, et
lire un type de disque de priorité élevée suivante à partir de l'ordre de détermination et effectuer à nouveau un test pour déterminer si le type du disque actuellement chargé correspond au type du disque de priorité élevée suivant lu, si le disque actuellement chargé ne correspond pas au type du disque de priorité élevée lu,
**caractérisé par** :
la mise à jour de la pluralité ordonnée des types de disques optiques mémorisés dans la mémoire (3) de sorte que le type du disque optique actuellement chargé a la priorité la plus élevée et le type d'un disque chargé immédiatement précédemment a la priorité suivante.

19. Procédé selon la revendication 18, comportant en outre l'attribution d'une priorité à plusieurs types de disques sur la base des informations concernant des types de disques de disques précédemment chargés.

20. Procédé selon la revendication 19, comportant en outre les étapes consistant à :
décrire des types de disques qui ont été précédemment chargés,
déterminer des fréquences auxquelles certains types de disques sont chargés, et
écrire un enregistrement d'utilisation de type de disque dans lequel les informations concernant des types de disques de disques précédemment chargés comportent la description des types de disques qui ont été précédemment chargés, des fréquences déterminées, et de l'enregistrement écrit.

21. Procédé selon la revendication 20, dans lequel l'écriture de l'enregistrement comporte les étapes consistant à :
déterminer des fréquences auxquelles certains types de disques sont chargés,
attribuer des pondérations à certaines fréquences, et
écrire l'enregistrement sur la base des pondérations attribuées.

22. Procédé selon l'une quelconques des revendications 18 à 21, dans lequel lorsque le type de disque de priorité élevée lu est un disque numérique polyvalent (DVD), le procédé comporte en outre l'exécution d'un processus de détection de disque spécifique (DDT) associé aux DVD.

23. Procédé selon la revendication 22, comportant en outre l'étape consistant à déterminer si le DVD est un DVD réinscriptible ou un DVD à lecture seule.

24. Procédé selon l'une quelconques des revendications 18 à 23, dans lequel si le type de disque de priorité élevée lu est un disque BLU-RAY (BD), le procédé comporte en outre l'exécution d'un processus de détection de disque spécifique (DT) associé aux disques BD.

25. Support d'enregistrement lisible par ordinateur mémorisant un programme pour mettre en oeuvre le procédé selon l'une quelconque des revendications 18 à 24.
